# EUROPÄISCHE PATENTSCHRIFT

(11) **EP 2 655 118 B1**
(45) Veröffentlichungstag und Bekanntmachung des Hinweises auf die Patenterteilung: **13.09.2017**
(21) Anmeldenummer: 11802730.9
(22) Anmeldetag: 21.12.2011
(51) Int. Cl.: B60K 35/00, B60R 11/02, B32B 17/10, G02F 1/13, G09F 9/00

(54) **ANZEIGEEINRICHTUNG FÜR EIN KRAFTFAHRZEUG**
DISPLAY DEVICE FOR A MOTOR VEHICLE
DISPOSITIF D'AFFICHAGE POUR VÉHICULE AUTOMOBILE

(30) Priorität: 22.12.2010 DE 102010063969
(43) Veröffentlichungstag der Anmeldung: 30.10.2013
(73) Patentinhaber: Bayerische Motoren Werke Aktiengesellschaft, 80809 München (DE)
(72) Erfinder: PILKINGTON, Mark, 80995 Muenchen (DE); BALWE, Andreas, 80637 Muenchen (DE)
(86) Internationale Anmeldenummer: PCT/EP2011/073591
(87) Internationale Veröffentlichungsnummer: WO 2012/085083

(56) Entgegenhaltungen:
- DE-A1-102007 012 571
- DE-U1-202006 017 388
- JP-A- 2008 139 833

## Beschreibung

Die Erfindung betrifft eine Anzeigeeinrichtung und ein Kraftfahrzeug.

Es ist insbesondere im Fahrzeugbereich eine Vielzahl verschiedener Typen von Anzeigeeinrichtungen bekannt. Im Vordergrund der Entwicklungsbemühungen stehen neben der guten Ablesbarkeit von auf den Anzeigeeinrichtungen dargestellten Informationen, und der Minimierung des Herstellungs- oder Integrationsaufwandes auch eine ansprechende und ästhetische Optik der einzelnen oder der miteinander kombinierten Anzeigeeinrichtungen. Neuere Entwicklungen sehen freistehende Anzeigeeinrichtungen vor. Hierbei ist es wichtig, eine leichte und grazile optische Erscheinung der Anzeigeeinrichtung zu ermöglichen, die zugleich die hohen Sicherheitsanforderungen an eine freistehende Anzeigeeinrichtung in einem Kraftfahrzeuginnenraum erfüllt.

Die JP-A-2008 139833 offenbart eine gattungsgemäße Anzeigeeinrichtung für ein Kraftfahrzeug
- mit einem an der Vorderseite offenen Anzeigeeinrichtungsgehäuse, in dem ein Display angeordnet ist,
- mit einer Verbundsicherheitsglasplatte, die dem Display an einer Vorderseite vorgelagert ist, und die durch das Anzeigeeinrichtungsgehäuse und/oder das Display getragen wird,
- bei der das Display einen Display-Rahmen aufweist, durch den die Verbundsicherheitsglasplatte getragen wird,
- bei der die vordere Glasplatte auf der Vorderseite mit einer Antiblendbeschichtung beschichtet ist,
- bei der das Gehäuse einen innenliegenden, umlaufenden Steg aufweist, durch den die Verbundsicherheitsglasplatte getragen wird.

Der Erfindung liegt die Aufgabe zu Grunde, den Stand der Technik zu verbessern.

Diese Aufgabe wird durch die Merkmale des unabhängigen Anspruchs gelöst. Vorteilhafte Weiterbildungen der Erfindung sind den abhängigen Ansprüchen zu entnehmen.

Eine erfindungsgemäße, insbesondere freistehende, Anzeigeeinrichtung für ein Kraftfahrzeug umfasst ein Anzeigeeinrichtungsgehäuse, das an der Vorderseite offen ist. In dem Anzeigeeinrichtungsgehäuse ist ein Display, wie beispielsweise ein LCD-Display, angeordnet. Außerdem verfügt die Anzeigeeinrichtung über eine Verbundsicherheitsglasplatte, die dem Display an der Vorderseite vorgelagert ist, und die durch das Anzeigeeinrichtungsgehäuse und/oder das Display mittelbar oder unmittelbar getragen wird.

Damit wird eine Anzeigeeinrichtung für ein Kraftfahrzeug geschaffen, die in einem Kraftfahrzeug freistehend realisiert werden kann, die leicht und grazil gestaltet werden kann, und die dennoch sicher ist.

Umfangreiche, der Erfindung zu Grunde liegende und eigens für diesen Zweck durchgeführte Untersuchungen ergaben, dass zur Abdeckung der offenen Vorderseite des Anzeigeeinrichtungsgehäuses Verbundsicherheitsglas besonders vorteilhaft ist. Es zeigte sich bei diesen Untersuchungen, dass eine Abdeckung aus alternativen Materialien, wie beispielsweise aus Kunststoff (PMMA, PCMA, etc.) oder aus gehärtetem Sicherheitsglas entweder zu weich ist, Crashtest-Anforderungen nicht erfüllt (gehärtetes Sicherheitsglas), zu zu dicken Platten führen würde (gehärtetes Sicherheitsglas), mit polarisierten Sonnenbrillengläsern nicht genützt werden kann (Kunststoffe) oder zu zu hohen Kosten für die Antireflex- oder Antiblendschicht (Kunststoffe) führen würde. Nur der Einsatz einer Verbundsicherheitsglasplatte erwies sich für den genannten Einsatzzweck als serientauglich.

Das Display weist einen Display-Rahmen auf, durch den die Verbundsicherheitsglasplatte getragen wird.

Es ist eine andere Weiterbildung, dass die Verbundsicherheitsglasplatte über eine Klebefolie, insbesondere ein doppelseitiges Klebeband, mit dem Anzeigeeinrichtungsgehäuse und/oder dem Display verbunden ist. Dadurch wird auf einfache Weise eine zuverlässige Befestigung der Verbundsicherheitsglasplatte gewährleistet.

Die Verbundsicherheitsglasplatte weist eine vordere Glasplatte, eine hintere Glasplatte und eine dazwischen liegende Folie, insbesondere eine PVB(Polyvinylbutyral)-Folie, auf. Dadurch können die Crashtestanforderungen und die Ablesbarkeitsanforderungen an eine Anzeigeeinrichtung für ein Kraftfahrzeug erfüllt werden.

Um die Ablesbarkeit der Anzeigeeinrichtung zu verbessern, ist die vordere Glasplatte gemäß einer Weiterbildung auf der Vorderseite mit einer Antireflexschicht (=anti reflection Schicht AR) beschichtet oder ausgeführt. Dies reduziert mögliche Reflexionen umgebender Lichtquellen.

Die Formulierung "die Glasplatte ist mit einer Schicht beschichtet bzw. ausgeführt" umfasst im Rahmen der Erfindung auch eine Oberflächenbehandlung einer Glasplatte, durch welche die Oberfläche der Glasplatte, beispielsweise durch ein Bedampfen, ein Ätzverfahren, ein Tauchbad, usw., derart modifiziert, insbesondere aufgeraut, wird, dass die Oberfläche der Glasplatte einer Reflexion oder einer Blendung ebenso entgegen wirkt, wie beispielsweise eine eigens dafür aufgebrachte Schicht aus einem anderen Material. Auch das Aufbringen einer entsprechenden Folie auf die Glasplatte ist durch die genannte Formulierung umfasst.

Um die Ablesbarkeit der Anzeigeeinrichtung weiter zu verbessern, ist die vordere Glasplatte auf der Vorderseite mit einer Antiblendschicht (=Antiglare-Schicht, AG) beschichtet oder ausgeführt. Mögliche Reflexionen werden dadurch anteilig an der Oberfläche des Glases in diffuses Licht gestreut.

Um die Erzeugung der Antiblendschicht auf der Vorderseite der vorderen Glasplatte zu erleichtern, wird die gesamte vordere Glasplatte vorzugsweise in ein Tauchbad mit einer ätzenden Flüssigkeit getaucht. Die damit zwangsläufig einhergehende Antiblendschicht auf der Rückseite der vorderen Glasplatte wirkt im Rahmen der Erfindung aufgrund der unmittelbar dahinter liegenden Folie nicht störend, insbesondere nicht stark streuend.

Um die Ablesbarkeit der Anzeigeeinrichtung weiter zu verbessern, ist die hintere Glasplatte auf der Rückseite mit einer Antireflexschicht beschichtet oder ausgeführt. Dies reduziert wiederum Reflexionsverluste innerhalb des Anzeigenaufbaus, die ansonsten beispielsweise aufgrund der durch den erfindungsgemäßen Aufbau entstehenden Medienübergänge auftreten würden.

Das Anzeigeeinrichtungsgehäuse weist einen innenliegenden (zumindest teilweise oder komplett) umlaufenden Steg auf, durch den die Verbundsicherheitsglasplatte getragen wird. Der Steg ist gegenüber der Vorderkante des Anzeigeeinriclitungsgehäuses vorzugsweise zurückgesetzt, so dass die Verbundsicherheitsglasplatte durch die Vorderkante des Anzeigeeinrichtungsgehäuses eingerahmt und geschützt wird. Das Anzeigeeinrichtungsgehäuse bildet dabei einen die Verbundsicherheitsglasplatte einfassenden Rahmen.

Vorzugsweise korrespondiert der durch den umlaufenden Steg und/oder die Vorderkante des Anzeigeeinrichtungsgehäuses gebildete Gehäuseausschnitt mit der Form der Verbundsicherheitsglasplatte. Beispielsweise sind beide Formen im Wesentlichen als Rechtecke mit im Wesentlichen gleichen Abmessungen ausgeführt.

Gemäß der Erfindung ist auf der Folie oder auf einer Glasplatte der Verbundsicherheitsglasplatte ein am Rand umlaufender Schwarzdruck ausgeführt, durch den der dahinter liegende Steg und/oder der dahinterliegende Rahmen des Displays und/oder die dahinterliegende Klebefolie im Wesentlichen abgedeckt wird, so dass sie für einen Nutzer nicht sichtbar sind. Vorteilhafterweise ist der Schwarzdruck dabei derart ausgeführt, dass durch die Verbundsicherheitsglasplatte hindurch aber die zur Informationsanzeige nutzbare Displayfläche zu 100%, zu mehr als 95% oder zu mehr als 90% sichtbar bleibt.

Im Folgenden wird die Erfindung anhand von Beispielen unter Bezugnahme auf die folgenden Figuren näher erläutert:
- Figur 1: zeigt eine schematische Schnittdarstellung eines Teils einer Anzeigeeinrichtung;
- Figur 2: zeigt eine schematische Darstellung eines Teils einer Verbundsicherheitsglasplatte.

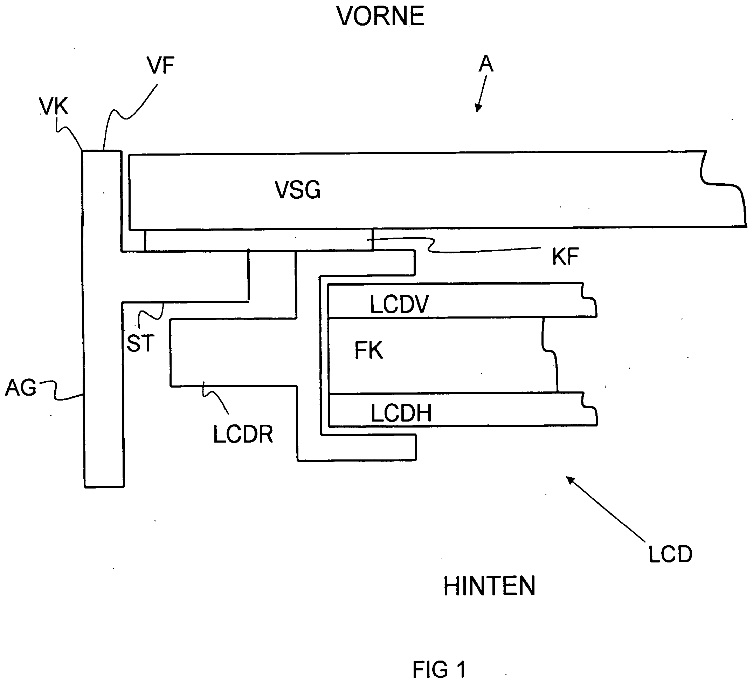

Figur 1 zeigt schematisch den Schnitt durch einen Teil einer Anzeigeeinrichtung A für ein Kraftfahrzeug. Es ist ein Anzeigeeinrichtungsgehäuse AG gezeigt, in dem ein LCD-Display LCD enthalten ist.

Das an sich bekannte LCD-Display LCD umfasst in konstruktiver Hinsicht im Wesentlichen eine vordere LCD-Scheibe LCDV, eine hintere LCD-Scheibe LCDH, eine dazwischen liegende Flüssigkristallschicht FK und einen LCD-Rahmen LCDR, durch den die genannten Komponenten zusammengehalten und getragen werden. Die vordere LCD-Scheibe LCDV ist auf der Vorderseite mit einer Antiblendschicht AG und einer Antireflexschicht AR ausgestattet.

Weitere Komponenten des LCD-Displays LCD, wie eine Hinterleuchtung oder die LCD-Elektronik, sind nicht dargestellt, da sie für das Verständnis der Erfindung keine Rolle spielen.

Das LCD-Display LCD und/oder das Anzeigeeinrichtungsgehäuse AG werden vorzugsweise durch einen nicht dargestellten Metallrahmen getragen, der seinerseits mit dem Kraftfahrzeug, insbesondere dem Armaturenbrett, mechanisch so verbunden ist, dass die Anzeigeeinrichtung A durch das Armaturenbrett freistehend getragen wird.

Das LCD-Display LCD und das Anzeigeeinrichtungsgehäuse AG sind unmittelbar und/oder über den Metallrahmen mechanisch miteinander verbunden.

Das Anzeigeeinrichtungsgehäuse AG ist derart ausgeführt, dass an der Vorderseite eine Vorderkante VK ausgebildet wird. Die um die Vorderseite des Anzeigeeinrichtungsgehäuse AG umlaufende Vorderkante VK bildet, ggf. zusammen mit einer sich in Richtung Vorderseitenzentrum ausdehnenden, umlaufenden Vorderseitenfläche VF, einen Rahmen für eine Verbundsicherheitsglasplatte VSG. Gegenüber der Vorderkante VK bzw. der Vorderseitenfläche VF zurückgesetzt wird durch das Anzeigeeinrichtungsgehäuse AG an der Innenseite des Anzeigeeinrichtungsgehäuse AG ein umlaufender Steg ST ausgebildet, durch den die Verbundsicherheitsglasplatte VSG getragen wird.

Die Verbundsicherheitsglasplatte VSG bildet im Wesentlichen die Vorderseite der Anzeigeeinrichtung AG und schließt zugleich das nach vorne offene Anzeigeeinrichtungsgehäuse AG ab. Die Verbundsicherheitsglasplatte VSG, der LCD-Rahmen und das Anzeigeeinrichtungsgehäuse AG sind über eine Klebefolie KF, insbesondere eine Doppelklebeband, derart miteinander verbunden, dass das die Verbundsicherheitsglasplatte VSG getragen wird.

Die Verbundsicherheitsglasplatte VSG und das Anzeigeeinrichtungsgehäuse AG sind derart ausgeführt, dass der durch den umlaufenden Steg ST, die umlaufende Vorderseitenfläche VF und/oder die Vorderkante VK des Anzeigeeinrichtungsgehäuses AG gebildete Gehäuseausschnitt mit der Form der Verbundsicherheitsglasplatte VSG korrespondiert, so dass durch das Anzeigeeinrichtungsgehäuse AG ein die Verbundsicherheitsglasplatte VSG einfassender Rahmen gebildet wird.

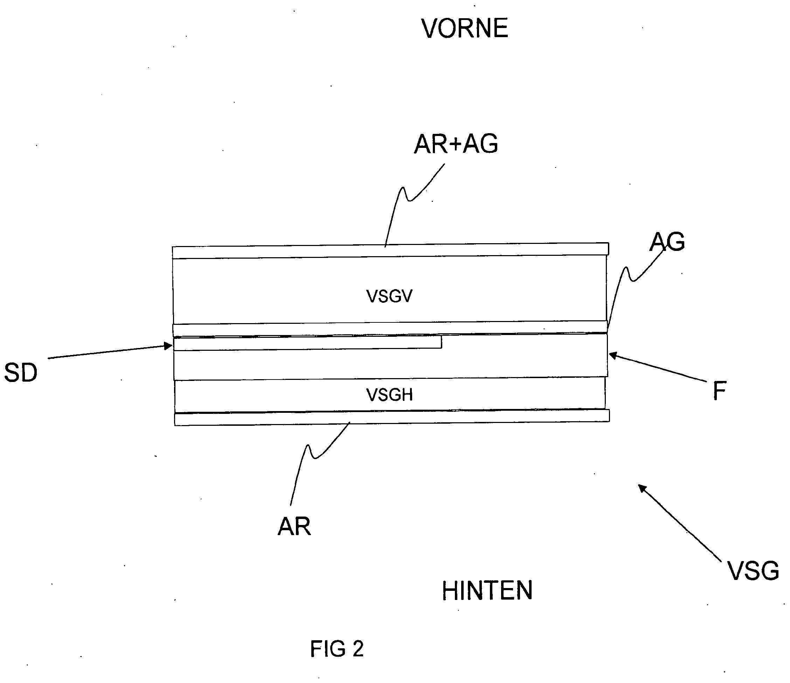

Im Folgenden wird anhand Figur 2 die Verbundsicherheitsglasplatte VSG näher beschrieben. Die Verbundsicherheitsglasplatte VSGV weist eine vordere Glasplatte VSGV und eine hintere Glasplatte VSGH und eine dazwischen liegende PVB(Polyvinylbutyral)-Folie F auf.

Auf der Folie F oder auf einer der Glasplatten VSGV, VSGH der Verbundsicherheitsglasplatte VSG ist ein am Rand umlaufender Schwarzdruck SD derart ausgeführt, dass durch den Schwarzdruck der Steg ST, die Klebfolie KF und/oder der Rahmen LCDR durch abgedeckt werden, so dass diese Elemente durch einen vor der Anzeigeeinrichtung A platzierten Nutzer nicht sichtbar sind.

Die vordere Glasplatte VSGV ist dabei auf der Vorderseite mit einer an sich bekannten Antireflexschicht AR und einer an sich bekannten Antiblendschicht (Antiglare) AG beschichtet und auf der Rückseite ebenfalls mit einer an sich bekannten Antiblendschicht AG beschichtet. Die hintere Glasplatte VSGH ist auf der Rückseite mit einer Antireflexschicht AR beschichtet.

## Patentansprüche

1. Anzeigeeinrichtung (A) für ein Kraftfahrzeug
- mit einem an der Vorderseite offenen Anzeigeeinrichtungsgehäuse, in dem ein Display angeordnet ist,
- mit einer Verbundsicherheitsglasplatte, die dem Display (LCD) an einer Vorderseite vorgelagert ist, und die durch das Anzeigeeinrichtungsgehäuse und/oder das Display getragen wird,
- bei der das Display einen Display-Rahmen aufweist, durch den die Verbundsicherheitsglasplatte getragen wird,
- bei der die Verbundsicherheitsglasplatte eine vordere Glasplatte, eine hintere Glasplatte und eine dazwischen liegende Folie aufweist,
- bei der die vordere Glasplatte auf der Vorderseite mit einer Antireflexbeschichturig beschichtet ist,
- bei der die vordere Glasplatte auf der Vorderseite mit einer Antiblendbeschichtung beschichtet ist,
- bei der die vordere Glasplatte auf der Rückseite mit einer Antiblendbeschichtung beschichtet ist,
- bei der das Gehäuse einen innenliegenden, umlaufenden Steg aufweist, durch den die Verbundsicherheitsglasplatte getragen wird,
- bei der auf der Folie oder auf einer Glasplatte der Verbundsicherheitsglasplatte ein am Rand umlaufender Schwarzdruck ausgeführt ist, durch den der Steg abgedeckt wird, und
- bei der durch das Anzeigeeinrichtungsgehäuse ein die Verbundsicherheitsglasplatte einfassender Rahmen gebildet wird.

2. Anzeigeeinrichtung nach Anspruch 1,
bei der die Verbundsicherheitsglasplatte über eine Klebefolie, insbesondere ein doppelseitiges Klebeband mit dem Anzeigeeinrichtungsgehäuse und/oder dem Display verbunden ist.

3. Anzeigeeinrichtung nach einem der vorhergehenden Ansprüche,
bei der die hintere Glasplatte auf der Rückseite mit einer Antiblendbeschichtung beschichtet ist.

## Claims

1. A display device (A) for a motor vehicle,
- having a display device housing, which is open at the front face and in which a display is arranged,
- having a laminated safety glass panel, which is disposed in front of the display (LCD) at a front face and which is supported by the display device housing and/or the display,
- wherein the display has a display frame, by which the laminated safety glass panel is supported,
- wherein the laminated safety glass panel has a front glass panel, a rear glass panel, and a film disposed therebetween,
- wherein the front glass panel is coated on the front face with an antireflection coating,
- wherein the front glass panel is coated on the front face with an anti-glare coating,
- wherein the front glass panel is coated on the rear face with an anti-glare coating,
- wherein the housing has an internal, peripheral web, by which the laminated safety glass panel is supported,
- wherein a black print is formed on the film or on a glass panel of the laminated safety glass panel, which black print runs peripherally at the edge and covers the web, and
- wherein a frame surrounding the laminated safety glass panel is formed by the display device housing.

2. A display device according to claim 1,
wherein the laminated safety glass panel is connected to the display device housing and/or the display by means of an adhesive film, more especially a double-sided adhesive tape.

3. A display device according to either one of the preceding claims,
wherein the rear glass panel is coated on the rear face with an anti-glare coating.

## Revendications

1. Dispositif d'affichage (A) destiné à un véhicule comprenant :
- un boîtier de dispositif d'affichage ouvert sur sa face avant dans lequel est monté un écran,
- une plaque de verre de sécurité composite qui est montée à l'avant de l'écran (LCD) sur la face avant et est portée par le boîtier du dispositif d'affichage et/ou l'écran,
dispositif d'affichage dans lequel
- l'écran comporte un cadre d'écran portant la plaque de verre de sécurité composite,
- la plaque de verre de sécurité composite comporte une plaque de verre avant, une plaque de verre arrière et un film situé entre ces plaques de verre,
- la plaque de verre avant est recouverte sur sa face avant d'un revêtement antiréfléchissant,
- la plaque de verre avant est recouverte sur sa face avant d'un revêtement anti-éblouissement,
- la plaque de verre avant est revêtue sur sa face arrière d'un revêtement antiéblouissement,
- le boîtier comporte une nervure interne périphérique portant la plaque du verre de sécurité composite,
- sur les bords du film ou de l'une des plaques de verre de la plaque de verre de sécurité composite est réalisée une impression noire périphérique, recouvrant la nervure, et
- un cadre bordant la plaque de verre de sécurité composite est formé par le boîtier du dispositif d'affichage.

2. Dispositif d'affichage conforme à la revendication 1,
dans lequel la plaque de verre de sécurité composite est reliée par un film adhésif, en particulier, une bande adhésive double face au boîtier du dispositif d'affichage et/ou l'écran.

3. Dispositif d'affichage conforme à l'une des revendications précédentes,
dans lequel la plaque de base arrière est recouverte sur sa face arrière d'un revêtement antiéblouissement.
